# EUROPEAN PATENT SPECIFICATION

(11) **EP 4 506 826 B1**
(45) Date of publication and mention of the grant of the patent: **15.07.2026**
(21) Application number: 24215828.5
(22) Date of filing: 27.11.2024
(51) Int. Cl.: G06F 12/02, G06F 12/084, G06F 9/50, G06F 12/0893

(54) **BANDWIDTH CONTROL METHOD AND SYSTEM, ELECTRONIC DEVICE, VEHICLE, AND STORAGE MEDIUM**
BANDBREITENSTEUERUNGSVERFAHREN UND -SYSTEM, ELEKTRONISCHE VORRICHTUNG, FAHRZEUG UND SPEICHERMEDIUM
PROCÉDÉ ET SYSTÈME DE COMMANDE DE BANDE PASSANTE, DISPOSITIF ÉLECTRONIQUE, VÉHICULE ET SUPPORT D'INFORMATIONS

(30) Priority: 16.08.2024 CN 202411131916
(43) Date of publication of application: 12.02.2025
(73) Proprietor: XG TECH PTE. LTD., Singapore 179098 (SG)
(72) Inventor: YU, Jianfeng, Singapore 179098 (SG)
(74) Representative: Patentanwälte Magenbauer & Kollegen Partnerschaft mbB

(56) References cited:
- US-A1- 2024 061 780
- US-B1- 6 222 856

## Description

### FIELD OF THE INVENTION

The present disclosure relates to the technical field of integrated circuits, and in particular, to a bandwidth control method and system, an electronic device, a vehicle, and a storage medium.

### BACKGROUND OF THE INVENTION

Multiple operating systems (OS) may run on some integrated circuits, such as a system on chip (SoC). These operating systems may share bandwidth resources corresponding to the integrated circuits, for example, may share memory bandwidth.

At present, when the multiple operating systems run on the integrated circuit, there is an issue of unreasonable allocation of bandwidth resources corresponding to the integrated circuit, which affects service performance of each of the operating systems.

US 6 222 856 B1 deals with a bandwidth control method by tracking the bandwidth being presently used by associated virtual services and maintains the bandwidth threshold set by an administrator to trigger throttling actions for that virtual service.

US 2024/061780 A1 relates to a cache access prediction method to improve the memory bandwidth allocation process by selectively throttling LLC accesses based on the predicted cache access outcome.

### SUMMARY OF THE INVENTION

The invention is set out in the appended set of claims. The dependent claims set out particular embodiments.

Embodiments of the present disclosure provide a bandwidth control method and apparatus, an integrated circuit, an electronic device, and a vehicle, so that when there are multiple operating systems running on an integrated circuit, resources of the integrated circuit may be dynamically allocated to all operating systems, thereby improving service performance and resource utilization of each of the operating systems.

According to a first aspect, an embodiment of the present disclosure provides a bandwidth control method. The method includes: determining a state value indicating a usage state of a cache queue, wherein the cache queue is used for caching of access stream, to a second hardware unit, of multiple operating systems running on a first hardware unit; determining, based on the state value and a plurality of throttling parameters preset for each of the operating systems, bandwidth thresholds, as target bandwidth thresholds, respectively corresponding to the operating systems running on the first hardware unit, wherein each of the throttling parameters includes one of the bandwidth thresholds; and controlling respectively, based on the target bandwidth thresholds respectively corresponding to the operating systems, bandwidths for the operating systems running on the first hardware unit for accessing the second hardware unit.

According to a second aspect, an embodiment of the present disclosure provides a bandwidth control apparatus. The apparatus includes a first throttling module in a communication connection to a first hardware unit on which multiple operating systems run, and the first throttling module corresponds to a first operating system. The first throttling module is configured to: acquire a usage state of a cache queue, where the cache queue is used for caching of access stream, to a second hardware unit, of the multiple operating systems running on the first hardware unit; determine a first throttling parameter for the first operating system based on the usage state of the cache queue; and control, based on the first throttling parameter, bandwidth for the first operating system for accessing the second hardware unit.

According to a third aspect, an embodiment of the present disclosure provides an integrated circuit. The integrated circuit includes: a first hardware unit, on which multiple operating systems run; and a plurality of throttling modules in one-to-one correspondence to the multiple operating systems. The plurality of throttling modules are in communication connections to the first hardware unit, and at least one of the throttling modules is configured to implement functions of the first throttling module according to the second aspect, for example, perform steps of the bandwidth control method according to the first aspect.

According to a fourth aspect, an embodiment of the present disclosure provides an electronic device. The electronic device includes the integrated circuit according to the third aspect.

According to a fifth aspect, an embodiment of the present disclosure provides a vehicle. The vehicle includes the integrated circuit according to the third aspect or the electronic device according to the fourth aspect.

According to a sixth aspect, a non-transitory computer readable storage medium, on which a computer program is stored, wherein the computer program, when executed by a processor, causes the processor to implementing the bandwidth control method as above.

According to technical solutions provided in the embodiments of the present disclosure, the bandwidth for each of the operating systems for accessing the second hardware unit may be controlled based on the usage state of the cache queue, so that bandwidth resources for the second hardware unit are dynamically allocated. Not only service performance of each of the operating systems may be improved, but also utilization of the bandwidth resources may be increased, wastes of the bandwidth resources being reduced.

### BRIEF DESCRIPTION OF THE DRAWINGS

FIG. 1 is a block diagram illustrating a structure of a cockpit-driving integrated system according to an exemplary embodiment of the present disclosure;
FIG. 2 is a schematic diagram illustrating a structure of a bandwidth control system according to an exemplary embodiment of the present disclosure;
FIG. 3 is a flowchart illustrating a bandwidth control method according to an exemplary embodiment of the present disclosure;
FIG. 4 is a schematic diagram illustrating dynamically controlling of access bandwidth according to an exemplary embodiment of the present disclosure;
FIG. 5 is a flowchart illustrating step S120 of a bandwidth control method according to an exemplary embodiment of the present disclosure;
FIG. 6 is a schematic diagram illustrating determining of a target bandwidth threshold according to an exemplary embodiment of the present disclosure;
FIG. 7 is a schematic diagram illustrating a structure of a bandwidth control apparatus according to an exemplary embodiment of the present disclosure; and
FIG. 8 is a schematic diagram illustrating a structure of an integrated circuit according to an exemplary embodiment of the present disclosure.

### DETAILED DESCRIPTION OF THE EMBODIMENTS

Exemplary embodiments of the present disclosure are described below in detail with reference to accompanying drawings. Obviously, the described embodiments are merely a part, rather than all, of embodiments of the present disclosure. It should be understood that the present disclosure is not limited by the exemplary embodiments described herein.

It should be noted that, unless otherwise specified, the scope of the present disclosure is not limited by relative arrangement, numeric expressions, and numerical values of components and steps described in these embodiments.

Firstly, some technical terms involved in the embodiments of the present disclosure are explained and clarified.

Bandwidth: referring to an amount of data transmitted per unit time, where units of bandwidth may be bits per second (bps), kilobits per second (kbps), megabits per second (Mbps), gigabits per second (Gbps), and the like.

Memory: referring to a device in a computer system that is used to temporarily store data and instructions for fast access and execution by a processor, where the memory may include random access memory (RAM), such as a dynamic random access memory (dynamic RAM, DRAM), a static random access memory (static RAM, SRAM), etc..

Memory bandwidth: also referred to as bandwidth resources of a memory, and referring to an amount of data that may be transmitted by a memory per unit time, where units of the memory bandwidth may be bps, kbps, Mbps, Gbps, and the like.

SoC: referring to an integrated circuit where plurality of modules/units of a computer system are integrated onto a single chip, where the modules/units that may be integrated onto the SoC include: a central processing unit (CPU), a graphics processing unit (GPU), an SRAM, an I/O interface, a digital signal processor (DSP), a deep learning processing unit (DPU), a neural network processing unit (NPU) and/or a tensor processing unit (TPU), an image signal processor (ISP), a memory controller, and the like.

### Application Overview

An operating system may run on an integrated circuit. For example, an integrated circuit may include a processor, and an operating system may run on the processor. The processor may communicate with memories (such as a DRAM and an SRAM). In this way, during operation of the operating system, the operating system may load instructions into the memory, where the processor may read instructions and data from the memory; perform various operations based on these instructions, such as an arithmetic operation, a logical operation, and data transmission; and then write instruction execution results into the memory.

Multiple operating systems may run on a high-performance integrated circuit, such as a high-performance SoC.

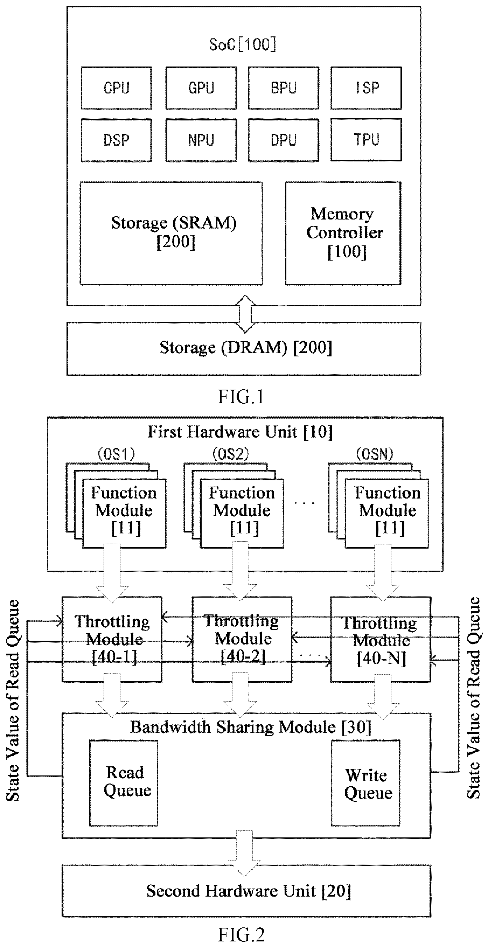

FIG. 1 is a block diagram illustrating a structure of a cockpit-driving integrated system according to an exemplary embodiment of the present disclosure.

In embodiments of the present disclosure, the cockpit-driving integrated system includes a hardware portion including an integrated circuit, and a software portion including a cockpit operating system (referred to as a cockpit system) and an intelligent driving operating system (referred to as an intelligent driving system) both of which run on the integrated circuit. In other words, the cockpit-driving integrated system is a hardware and software system where both the cockpit system and the intelligent driving system run on the integrated circuit. The intelligent driving system is mainly responsible for autonomous driving and safety for a vehicle, including environmental perception, path planning, decision-making, control, and the like. The cockpit system is mainly responsible for driving and riding experience and human-computer interaction inside the vehicle, including information entertainment, instrument display, media playback, environmental control, and the like. Compared with the cockpit system and the intelligent driving system running on different integrated circuits, the cockpit-driving integrated system has higher degrees of integration and intelligence, which is conducive to improving driving safety, comfort, and driving and riding experience of a mobile vehicle.

The cockpit-driving integrated system may be applied to autonomous driving vehicles, such as a land vehicle (an intelligent connected vehicle), a ship, a train, a subway, an airplane; to various robots such as a service robot, a transportation robot, an automated guided vehicle (AGV), and an unmanned ground vehicle (UGV); and to various construction machinery, and the like.

As shown in FIG. 1, in an embodiment, a cockpit-driving integrated system may include a SoC 100. In an example, the SoC 100 may include one or more processors, such as one or more CPUs, one or more GPUs, one or more ISPs, one or more DSPs, one or more DPUs, one or more NPUs, and/or one or more TPUs. These processors may be configured to provide computing resources for the multiple operating systems to support the operating systems to implement functions thereof.

In an embodiment, the cockpit-driving integrated system may further include a storage 200, in which instructions and data may be stored. The processor may read and execute the instructions from the storage 200, and write execution results into the storage 200. In an example, the storage 200 may include memories, such as a DRAM and/or an SRAM. The storage 200 is integrated on the SoC 100, such as the SRAM, as a part of the SoC 100; or the storage 200 may be a separate device, such as DRAM, outside the SoC 100, which is not limited in the embodiments of the present disclosure. In an example, the SoC may further include a memory controller 110, which may manage and coordinate access of the respective processors to the memories (such as the SRAM and the DRAM).

In an embodiment, a multiple operating systems, such as an OS 1 to an OS N, may run on the SoC 100. For example, the multiple operating systems may include at least a cockpit operating system and an intelligent driving operating system.

During operation, the multiple operating systems may call the processor to access the memory, such as reading instructions from the memory or writing instruction execution results to the memory. In other words, the multiple operating systems may jointly occupy memory bandwidth, for example, jointly occupying DRAM bandwidth and/or SRAM bandwidth.

In an implementation, the memory bandwidth may be pre-allocated to the respective operating systems. It is taken as an example that there are three operating systems, e.g., an OS 1, an OS 2, and an OS 3, running on the SoC with a DRAM bandwidth of 100 Gbps, in which 50 Gbps may be allocated to the OS 1, in which 30 Gbps may be allocated to the OS 2, and in which 20 Gbps may be allocated to the OS 3. However, because different operating systems may have different functions and perform different tasks, different operating systems may have different demands for DRAM bandwidth. In addition, because the tasks performed by each of the operating systems may change, demand of each of the operating systems for the DRAM bandwidth may also change dynamically.

It is taken as an example that the multiple operating systems include the intelligent driving system and the cockpit system.

For example, when the vehicle is in an intelligent driving state, the intelligent driving system needs to perform an intelligent driving task. In this case, the intelligent driving system may load a large amount of instructions and data related to the intelligent driving task into the DRAM to be read and executed by the processor, and the processor may also write a large amount of instruction execution results into the DRAM. Therefore, the intelligent driving system has a relatively higher demand for the DRAM bandwidth. In a parking scenario, the intelligent driving system does not need to perform an intelligent driving task, and thus instructions and data to be written into the DRAM by the intelligent driving system are relatively fewer, and the intelligent driving system has a relatively lower demand for the DRAM bandwidth.

For example, when the vehicle performs media playback, the cockpit system needs to perform a task of media playback. In this case, the cockpit system may load instructions and media data into the DRAM to be read and executed by the processor, and the processor may write an instruction execution result into the DRAM. For example, the processor may decode the read media data and write the decoded media data into the DRAM. Therefore, the cockpit system has a relatively higher demand for the DRAM bandwidth. In a standby scenario, the cockpit system does not need to perform tasks such as media playback, navigation, and gaming, and thus, there are fewer instructions and data to be written into the DRAM by the cockpit system, and the cockpit system has a relatively lower demand for the DRAM bandwidth.

Because the demand of each of the operating systems for the memory bandwidth changes dynamically, the manner of pre-allocating the memory bandwidth cannot achieve reasonable utilization of the memory bandwidth, and as a result, the memory bandwidth is wasted, and the memory bandwidth allocated to the operating system cannot meet service requirements of the operating system.

It is taken as an example that the multiple operating systems include the intelligent driving system and the cockpit system.

For example, it is assumed that the DRAM bandwidth allocated for the intelligent driving system is 50 Gbps and the DRAM bandwidth allocated for the cockpit system is 30 Gbps. When the vehicle is parked, the intelligent driving system does not need to perform an intelligent driving task, and therefor may enter an idle state, e.g., there is an idle DRAM bandwidth of 40 Gbps. In this case, although the cockpit system requires a DRAM bandwidth of 40 Gbps due to running of a gaming application, the cockpit system may use only the DRAM bandwidth of 30 Gbps that is allocated thereto and cannot utilize the idle DRAM bandwidth of the intelligent driving system. In other words, the DRAM bandwidth available to a certain operating system cannot be used for services in other operating systems, so that not only services performance of other operating systems cannot be improved, but also the DRAM bandwidth is wasted.

For another example, if the DRAM bandwidth allocated to the OS 1 is 50 Gbps and a current service of the OS 1 requires a DRAM bandwidth of 60 Gbps, the DRAM bandwidth owned by the OS 1 cannot meet service requirements of the OS 1, which affects the service performance in the OS 1.

In view of the above, when there are multiple operating systems running on the integrated circuit, there is an issue of unreasonable allocation of bandwidth resources, such as the memory bandwidth, that correspond to the integrated circuit, which affects the service performance of each of the operating systems.

Embodiments of the present disclosure provide a bandwidth control method and apparatus, an integrated circuit, an electronic device, and a vehicle, where the bandwidth resources corresponding to the integrated circuit may be allocated more reasonably when there are plurality of operating systems running on the integrated circuit, with the service performance of the operating system being improved and resource wastes being reduced.

### Exemplary System

FIG. 2 is a schematic diagram illustrating a structure of a bandwidth control system according to an exemplary embodiment of the present disclosure.

As shown in FIG. 2, the bandwidth control system may include: a first hardware unit 10 and a second hardware unit 20 in communication with the first hardware unit 10;
a bandwidth sharing module 30 disposed between the first hardware unit 10 and the second hardware unit 20, where the bandwidth sharing module 30 includes a cache queue for caching of access instructions, to the second hardware unit 20, of multiple operating systems, and is configured to generate a state value indicating a usage state of the cache queue; and
a plurality of throttling modules 40 in one-to-one correspondence to the multiple operating systems, disposed between the first hardware unit 10 and the bandwidth sharing module 30, and configured to: determine, based on the state value and a plurality of throttling parameters preset for each of the operating systems, target bandwidth thresholds respectively corresponding to the operating systems running on the first hardware unit 10; and control respectively, based on the target bandwidth thresholds respectively corresponding to the operating systems, bandwidths for the operating systems running on the first hardware unit 10 for accessing the second hardware unit 20.

The first hardware unit 10 may include a plurality of function modules 11 on an integrated circuit (such as a SoC). Each of the function modules 11 is configured to implement one or more functions of the integrated circuit (such as the SoC). For example, the function module 11 may be a CPU, a GPU, an NPU, a DPU, a TPU, an ISP, a DSP, or the like. In addition, the function module 11 may also be a core of the CPU, a stream processor of the GPU, or a computing unit of the NPU. In other words, each core of the CPU may serve as a function module 11, each stream processor of the GPU may serve as a function module 11, and each computing unit of the NPU may serve as a function module 11.

The multiple operating systems may run on the first hardware unit 10, such as an intelligent driving system, a cockpit system, and/or other operating systems. The multiple operating systems run on the first hardware unit 10. Different operating systems may run for different function modules 11, or different function modules 11 may be managed by different operating systems.

For example, the first hardware unit 10 includes three operating systems, referring to as OS 1 to OS3, respectively, and the CPU includes eight cores, which respectively are first to eighth cores. The OS 1 may run on both the first and second cores (or in other words, the first and second cores are managed by the OS 1), the OS 2 may run on the third to sixth cores (or in other words, the third to sixth cores are managed by the OS 2), and the OS 3 may run on the seventh and eighth cores (or in other words, the seventh and eighth cores are managed by the OS 3). Similarly, an operating system may manage one or more stream processors of the GPU, and may manage one or more computing units of the NPU.

When the ISP includes a plurality of ISP units, an operating system may manage at least one ISP unit, and different ISP units may be managed by different operating systems. Similarly, when the DSP includes a plurality of DSP units, an operating system may manage at least one DSP unit, and different DSP units may be managed by different operating systems.

In an implementation, each of the function modules 11 of the first hardware unit 10 may communicate with other hardware units (such as the second hardware unit 20), for example, access the second hardware unit 20.

For example, the first hardware unit 10 may communicate with the second hardware unit 20 through a bus. The bus may specifically be an advanced exptensible interface (AXI) bus, which may include 5 channels, such as:
a read address channel (AR): used for transmitting an address for read access;
a read data channel (R): used for transmitting data for the read access;
a write address channel (AW): used for transmitting an address for write access;
a write data channel (W): used for transmitting data for the write access; and
a write response channel (B): used for transmitting a response for the write access.

Certainly, buses in accordance with other protocols may also be used, such as an advanced high-performance bus (AHB), an inter-integrated circuit (I2C) bus, and HyperTransport bus, which are not limited in the embodiments of the present disclosure.

The second hardware unit 20 may include a memory or other hardware units that communicate with the first hardware unit 10. For example, the second hardware unit 20 may be a DRAM and/or an SRAM. Correspondingly, the bus may be a DRAM bus for the function module 11 (such as the CPU) in the SoC for accessing the DRAM, or may be an SRAM bus for access to the SRAM. Correspondingly, memory bandwidth refers to bandwidth of the DRAM bus (DRAM bandwidth for short) and/or bandwidth of the SRAM bus (SRAM bandwidth for short).

In the embodiments of the present disclosure, the first hardware unit 10 and the second hardware unit 20 may be located on different chips. For example, the first hardware unit 10 may be located on the SoC, and the second hardware unit 20 may be a DRAM disposed separately with respect to the SoC. Alternatively, the first hardware unit 10 and the second hardware unit 20 may also be located on a same chip. For example, the first hardware unit 10 may be located on the SoC, and the second hardware unit 20 may be an SRAM integrated on the SoC.

It should be noted that when the first hardware unit 10 includes multiple operating systems, each of the operating systems may call the function module 11 managed thereby to implement corresponding functions. Correspondingly, the function modules 11 may access the second hardware unit 20 (such as the memory) to read instructions and data, or write an instruction execution result, so as to implement the respective functions. Therefore, access of the function modules 11 to the second hardware unit 20 may be described as accesses of the operating systems to the second hardware unit 20, or may be described as access to the second hardware unit 20 by the operating systems calling the function module 11 managed thereby. For example, access of the first and second cores of the CPU to the DRAM may be described as access of the OS 1 to the DRAM, and access of the DSP managed by the OS 2 to the DRAM may be described as access of the OS 2 to the DRAM.

For ease of description of communication connection relationships between various modules/units in the bandwidth control system, taking that the function module 11 of the first hardware unit 10 accesses the second hardware unit 20 as an example, a transmission direction for this access is referred to as a downstream direction, and an opposite transmission direction for the access is referred to as an upstream direction.

In an implementation, the bandwidth control system may further include a bandwidth sharing module 30. The bandwidth sharing module 30 is located downstream of each of the function modules 11 and upstream of the second hardware unit 20. The bandwidth sharing module 30 is in a communication connection to each of the function modules 11 and the second hardware unit 20. In this way, the access of each of the function modules 11 may first go to the bandwidth sharing module 30 and then transfer to the second hardware unit 20.

In an implementation, the bandwidth sharing module 30 includes a cache queue for caching of instructions and/or data for the access. When the access of each of the function modules 11 goes to the bandwidth sharing module 30, caching into the cache queue may be performed firstly. Subsequently, the bandwidth sharing module 30 may schedule the access in the cache queue according to a preset scheduling strategy, such as first-in-first-out (FIFO) scheduling, priority scheduling or round-robin scheduling, and transfer the access to the second hardware unit 20. The cache queue may include a read queue and a write queue. Instructions and/or data for read access of each of the function modules 11 may enter the read queue, and instructions and/or data for write access of each of the function modules 11 may enter the write queue. Certainly, the read queue and the write queue may also be merged into one queue, and the instructions and/or data for the read access and the write access of the function module 11 all enter this queue. The cache queue may be a parallel queue or a serial queue, which is not limited in the embodiments of the present disclosure.

In an implementation, for example, the bandwidth sharing module 30 may include a memory controller, or in other words, functions of the bandwidth sharing module 30 may be implemented by a memory controller. The memory controller may be, for example, a DDR controller (DDRC) or other types of memory controllers. Correspondingly, the cache queue may be a read queue read_queue or a write queue write_queue in the memory controller.

In view of the above, the bandwidth sharing module 30 may manage and schedule the access of each of the function modules 11, so that each of the function modules 11 may efficiently utilize the memory bandwidth, and it may be avoided that conflicts occur when the function modules 11 access the second hardware unit 20, thereby improving system stability.

It may be understood that the function modules 11 may be classified based on correspondences between the function modules 11 and the operating systems. For example, modules running the OS 1 and managed by the OS 1 may be classified as function modules 11 of the OS 1, modules running the OS 2 and managed by the OS 2 may be classified as function modules 11 of the OS 2, and modules running an OS N and managed by the OS N may be classified as function modules 11 of the OS N.

In the embodiments of the present disclosure, the bandwidth control system may further include a plurality of throttling modules 40 in one-to-one correspondence to the multiple operating systems, such as throttling modules 40-1 to 40-N. The throttling module 40 may be disposed on a communication link between the function module 11 of the operating system corresponding to the throttling module 40 and the bandwidth sharing module 30. In other words, the throttling module 40 is disposed downstream of the function module 11, and the bandwidth sharing module 30 is disposed downstream of the throttling module 40. For example, the throttling module 40-1 may be disposed on a communication link between the function module 11 of the OS 1 and the bandwidth sharing module 30, and a throttling module 40-2 may be disposed on a communication link between the function module 11 of the OS 2 and the bandwidth sharing module 30, and so on. To be specific, the throttling module 40 and the function module 11 that correspond to the same operating system communicate with each other.

In this way, when the second hardware unit 20 is accessed by a certain operating system, this access stream (such as instructions or data) first passes through the throttling module 40 corresponding to the operating system, and then passes through the bandwidth sharing module 30 to be transmitted to the second hardware unit 20. A throttling may be performed on the access stream by the throttling module 40 when the access stream passes through the throttling module 40. In this way, downstream transmission bandwidth for the access stream may be controlled. In other words, bandwidth for the operating system for accessing the second hardware unit 20 is controlled.

In an implementation, each of the throttling module 40 may control, based on a usage state of the cache queue, the bandwidth for the corresponding operating system for accessing the second hardware unit 20. For example, when there is a large amount of access stream in the cache queue, that is, when the cache queue is relatively crowded, the throttling module 40 may control the corresponding operating system to access the second hardware unit 20 by lower bandwidth, that is, allocate lower memory bandwidth to the operating system. When there is a small amount of access stream in the cache queue, that is, when the cache queue is relatively idle, the throttling module 40 may allow the corresponding operating system to access the second hardware unit 20 by higher bandwidth, that is, allocate higher memory bandwidth to the operating system.

In view of the above, in a bandwidth control system provided in the embodiments of the present disclosure, a throttling module 40 is disposed for each of the operating systems. The throttling modules 40 may dynamically control, based on the usage state of the cache queue, the bandwidth for each of the operating systems for accessing the second hardware unit 20, so that bandwidth resources for the second hardware unit 20 are allocated more reasonably. Not only service performance of each of the operating systems may be improved, but also utilization of the bandwidth resources may be increased, wastes of the bandwidth resources being reduced.

### Exemplary Method

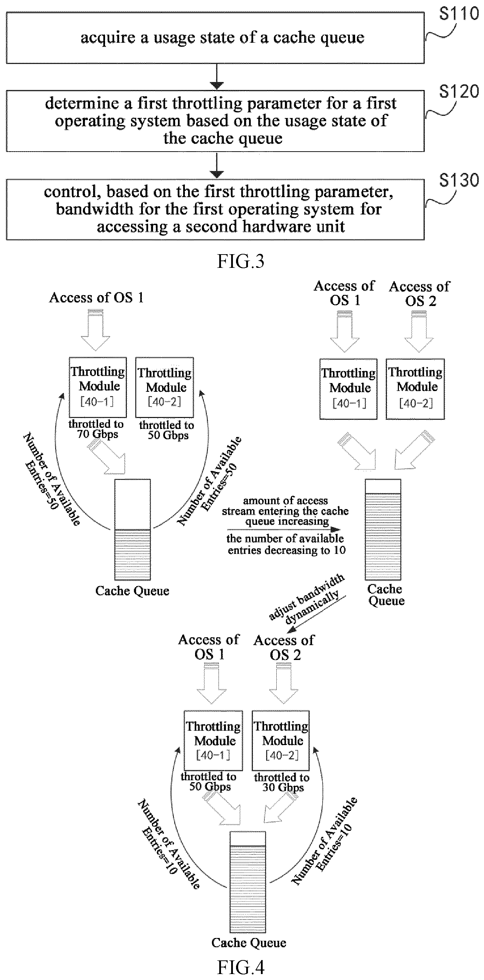

FIG. 3 is a flowchart illustrating a bandwidth control method according to an exemplary embodiment of the present disclosure.

Steps of this method are exemplarily described below with reference to FIG. 3. The steps of this method may be performed by any of the throttling modules 40 in a bandwidth control system. For ease of description, any one of the multiple operating systems running on a first hardware unit 10 may be referred to as a first operating system, and a throttling module 40 corresponding to the first operating system may be referred to as a first throttling module.

In an embodiment, the method may include the following steps.

Step S110. Acquire a usage state of a cache queue.

The cache queue may be any queue in a bandwidth sharing module 30, and is used for caching of access stream of multiple operating systems to a second hardware unit 20, for example, caching of instructions and/or data for the access. The usage state of the cache queue may include any parameter value or indicator information that may characterize an idle/crowding level of the cache queue.

In an implementation, the usage state of the cache queue may be indicated by using a state value of the cache queue, or by using other information such as a state level or a flag bit, which is not specifically limited herein.

For example, when the bandwidth sharing module 30 includes a read queue and a write queue, the cache queue may include the read queue and/or the write queue. The read queue is used for caching of read access instructions, to the second hardware unit 20, of the plurality of operating systems, while the write queue is used for caching of write access instructions, to the second hardware unit 20, of the multiple operating systems. Correspondingly, the state value of the cache queue may include a state value of the read queue and/or a state value of the write queue.

For example, when the read queue and the write queue are merged into a read-write queue, the state value of the cache queue may include a state value of the read-write queue.

The state value of the cache queue may represent an idle level or a crowding level of the cache queue, which is related to access bandwidth for each of the operating systems for the second hardware unit 20.

For example, when services in the operating systems are relatively busy, the access of the operating systems to the second hardware unit 20 may increase. Therefore, a large amount of access stream may enter the cache queue, so that the amount of the access stream entering the cache queue is greater than that of access stream leaving the cache queue, resulting in an increase in an amount of access stream cached in the cache queue and a lower idle level of the cache queue. Correspondingly, the bandwidth for the operating systems for accessing the second hardware unit 20 may also increase, resulting in a decrease in idle bandwidth resources for the second hardware unit 20.

Similarly, when the services in the operating systems are relatively idle, the access of the operating systems to the second hardware unit 20 may decrease. Therefore, only a small amount of access stream may enter the cache queue, so that the amount of the access stream entering the cache queue is greater than that of access stream leaving the cache queue, resulting in a decrease in an amount of access stream cached in the cache queue and a higher idle level of the cache queue. Meanwhile, the bandwidth for the operating systems for accessing the second hardware unit 20 may also decrease, resulting in an increase in the idle bandwidth resources for the second hardware unit 20.

In an implementation, the cache queue may include a plurality of entries, in each of which one access instruction may be cached. In the read queue, the entries may be read entries, and one read access instruction may be cached in each of the read entries. In the write queue, the entries may be write entries, and one write access instruction and also data to be written may be cached in each of the write entries. Correspondingly, the state value of the cache queue may include a number of available entries (which is also referred to as a number of idle entries) or a number of unavailable entries (which is also referred to as a number of non-idle entries) of the cache queue.

For example, the cache queue includes 10 entries. If instructions are cached in 8 entries, the number of available entries in the cache queue is 2 and the number of unavailable entries is 8. If instructions are cached in 2 entries, the number of available entries in the cache queue is 8 and the number of unavailable entries is 2.

It may be understood that when the state value of the cache queue includes the number of available entries in the cache queue, a larger state value indicates more idle bandwidth resources for the second hardware unit 20, while a smaller state value indicates fewer idle bandwidth resources for the second hardware unit 20. When the state value of the cache queue includes the number of unavailable entries in the cache queue, a larger state value indicates fewer idle bandwidth resources for the second hardware unit 20, while a smaller state value indicates more idle bandwidth resources for the second hardware unit 20.

In an implementation, the bandwidth sharing module 30 may transmit the state value of the cache queue to a first throttling module, for example, transmit the number of available entries or the number of unavailable entries in the cache queue to the first throttling module. If the bandwidth sharing module 30 includes the read queue and the write queue, the bandwidth sharing module 30 may transmit the state value of the read queue and/or the state value of the write queue to the first throttling module.

In an example, the bandwidth sharing module 30 may monitor the state value of the cache queue, for example, monitor the number of available entries or the number of unavailable entries in the cache queue. When the state value of the cache queue is changed, the bandwidth sharing module 30 transmits the changed state value to the first throttling module. For example, when the number of available entries or the number of unavailable entries in the cache queue is changed, the bandwidth sharing module 30 transmits the changed number of available entries or the changed number of unavailable entries to the first throttling module.

In an example, the bandwidth sharing module 30 may periodically transmit the state value of the cache queue to the first throttling module. For example, a timer that times out periodically at a preset interval may be configured for the bandwidth sharing module 30. The bandwidth sharing module 30 may transmit the state value of the cache queue to the first throttling module in response to a timeout signal of the timer.

In an example, the access stream entering and leaving the cache queue may cause changes in the number of available and the number of unavailable entries in the cache queue. Therefore, the bandwidth sharing module 30 may monitor events that the access stream enters and leaves the cache queue. When it is monitored that there is access stream entering or leaving the cache queue, the bandwidth sharing module 30 may acquire latest numbers of available and unavailable entries in the cache queue, and transmit the acquired numbers of available and unavailable entries to the first throttling module.

Step S120. Determine a first throttling parameter of a first operating system based on the usage state of the cache queue.

The first throttling parameter is used to perform throttling on the access of the first operating system to the second hardware unit 20, so as to control bandwidth for the first operating system for accessing the second hardware unit 20.

In an implementation, the first throttling parameter of the first operating system may be determined based on the state value of the cache queue. The first throttling parameter may include a target bandwidth threshold of the first operating system.

In an implementation, a plurality of throttling parameters may be preset for the first operating system, and each of the throttling parameters may include a preset bandwidth threshold. In addition, correspondences between the plurality of state values and the plurality of throttling parameters of the first operating system may be preset. In this way, after the state value of the cache queue is acquired, the throttling parameter corresponding to the state value of the cache queue may be determined as the first throttling parameter based on the correspondence.

It should be noted that in a scenario of multiple operating systems, services of different operating systems may be different, and bandwidth requirements for the second hardware unit 20 may also be different. Therefore, for a same state value, the throttling parameters of the various operating systems may be the same or different, which may be reasonably set based on service requirements of the operating systems, which is not specifically limited herein.

For example, a correspondence between the number of available entries (or the number of unavailable entries) in the cache queue and the bandwidth threshold of each of the operating systems may be preset, and this correspondence may be stored in a register corresponding to the first throttling module. Each of the throttling modules 40 may correspond to one register, or a register may be shared by plurality of throttling modules 40, which is not limited herein.

For example, when the state value of the cache queue includes the number of available entries in the cache queue, the bandwidth threshold of each of the operating systems may increase as the number of available entries in the cache queue increases. Similarly, when the state value of the cache queue includes the number of unavailable entries in the cache queue, the bandwidth threshold of each of the operating systems may decrease as the number of unavailable entries in the cache queue increases. In other words, the idle bandwidth resources for the second hardware unit 20 are the more, the bandwidth threshold of each of the operating systems is the larger; and idle bandwidth resources for the second hardware unit 20 are the fewer, the bandwidth threshold of each of the operating systems is the smaller.

The bandwidth threshold of each of the operating systems increasing as the number of available entries in the cache queue increases may include: the bandwidth threshold of each of the operating systems continuously increasing as the number of available entries in the cache queue increases, or the bandwidth threshold of each of the operating systems intermittently increasing as the number of available entries in the cache queue increases. The bandwidth threshold of each of the operating systems decreasing as the number of unavailable entries in the cache queue increases may include: the bandwidth threshold of each of the operating systems continuously decreasing as the number of unavailable entries in the cache queue increases, or the bandwidth threshold of each of the operating systems intermittently decreasing as the number of unavailable entries in the cache queue increases.

In other words, the correspondence between the number of available entries in the cache queue and the bandwidth threshold of each of the operating systems may be set flexibly according to actual throttling requirements, which is not limited in the embodiments of the present disclosure.

For example, it is taken as an example that the bandwidth resource for the second hardware unit 20 is 100 Gbps and the number of entries in the cache queue is 100, and the correspondence between the number of available entries in the cache queue and the bandwidth threshold of each of the operating systems may be preset as shown in table 1. It should be noted that values shown in table 1 are only examples, and do not constitute specific limitations on the embodiments of the present disclosure.

**Table 1:**

| Number Of Available Entries | Bandwidth Threshold of OS 1 | Bandwidth Threshold of OS 2 | Bandwidth Threshold of OS 3 |
|---|---|---|---|
| 0 | 50 Gbps | 30 Gbps | 20 Gbps |
| ... | ... | ... | ... |
| 10 | 50 Gbps | 30 Gbps | 20 Gbps |
| ... | ... | ... | ... |
| 50 | 70 Gbps | 50 Gbps | 30 Gbps |
| ... | ... | ... | ... |
| 90 | 80 Gbps | 60 Gbps | 40 Gbps |
| ... | ... | ... | ... |

In this way, the first throttling module may determine, based on the number of available entries that is transmitted from the bandwidth sharing module 30, the target bandwidth threshold corresponding to the received number of available entries from among the plurality of bandwidth thresholds corresponding to the first operating system.

For example, if the number of available entries in the cache queue is 10, the throttling module 40-1 may determine that a target bandwidth threshold of the OS 1 is 50 Gbps, the throttling module 40-2 may determine that a target bandwidth threshold of the OS 2 is 30 Gbps, and a throttling module 40-3 may determine that a target bandwidth threshold of the OS 3 is 20 Gbps. If the number of available entries in the cache queue is 50, the throttling module 40-1 may determine that the target bandwidth threshold of the OS 1 is 70 Gbps, the throttling module 40-2 may determine that the target bandwidth threshold of the OS 2 is 50 Gbps, and the throttling module 40-3 may determine that the target bandwidth threshold of the OS 3 is 30 Gbps.

In an implementation, when the cache queue includes the read queue and the write queue, throttling parameters may be set separately for the read access and the write access of the first operating system. Throttling parameters for the read access and the write access that correspond to a same state value may be the same or different.

For example, a correspondence between a number of available entries in the read queue and a read bandwidth threshold of each of the operating systems may be preset as shown in table 2.

**Table 2:**

| Number Of Available Entries In Read Queue | Read Bandwidth Threshold of OS 1 | Read Bandwidth Threshold of OS 2 | Read Bandwidth Threshold of OS 3 |
|---|---|---|---|
| ... | ... | ... | ... |
| 10 | 50 Gbps | 30 Gbps | 20 Gbps |
| ... | ... | ... | ... |
| 50 | 70 Gbps | 50 Gbps | 30 Gbps |
| ... | ... | ... | ... |

For example, a correspondence between a number of available entries in the write queue and a write bandwidth threshold of each of the operating systems may be preset as shown in table 3.

**Table 3:**

| Number of Available Entries In Write Queue | Write Bandwidth Threshold of OS 1 | Write Bandwidth Threshold of OS 2 | Write Bandwidth Threshold of OS 3 |
|---|---|---|---|
| ... | ... | ... | ... |
| 10 | 40 Gbps | 30 Gbps | 30 Gbps |
| ... | ... | ... | ... |
| 50 | 60 Gbps | 50 Gbps | 40 Gbps |
| ... | ... | ... | ... |

It should be noted herein that values shown in table 2 and table 3 are only examples, and do not constitute specific limitations on the embodiments of the present disclosure.

In this way, throttling may be performed on the read access and the write access of the first operating system, separately.

Step S130. Control, based on the first throttling parameter, bandwidth for the first operating system for accessing a second hardware unit.

In an implementation, when the access of the first operating system to the second hardware unit 20 passes through the first throttling module, the first throttling module may perform throttling on the access based on the target bandwidth threshold of the first operating system, so that the bandwidth for the first operating system for accessing the second hardware unit 20 is less than or equal to the target bandwidth threshold.

For example, with reference to table 1, when the number of available entries in the cache queue is 10, the target bandwidth threshold of the OS 1 is 50 Gbps. Therefore, the throttling module 40-1 may limit bandwidth for the OS 1 for accessing the second hardware unit 20 to be less than or equal to 50 Gbps. As a comparison, when the number of available entries in the cache queue is 50, the target bandwidth threshold of the OS1 is 70 Gbps. Therefore, the throttling module 40-1 may limit the bandwidth for the OS 1 for accessing the second hardware unit 20 to be less than or equal to 70 Gbps.

It should be noted herein that during operation of each of the operating systems, an amount of access of each of the operating systems to the second hardware unit 20 changes dynamically. Correspondingly, the number of available entries in the cache queue also changes dynamically, and therefore, the target bandwidth threshold of the first operating system also changes dynamically. In other words, the first throttling module may dynamically control the bandwidth for the first operating system for accessing the second hardware unit 20.

FIG. 4 is a schematic diagram illustrating dynamically controlling of access bandwidth according to an exemplary embodiment of the present disclosure.

For example, when the number of available entries in the cache queue is 50, the target bandwidth threshold of the OS 1 is 70 Gbp, and the target bandwidth threshold of the OS 2 is 50 Gbp. Therefore, when the second hardware unit is accessed by the OS 1, the throttling module 40-1 may limit the bandwidth for the OS 1 for accessing the second hardware unit 20 to 70 Gbps. In this case, when the second hardware unit is also accessed by the OS 2, the access stream of the OS 2 may also enter the cache queue, resulting in an increase in the number of the access stream entering the cache queue, and a decrease in the number of available entries in the cache queue. For example, the number of available entries decreases to 10. In this case, the bandwidth sharing module 30 may transmit the updated number of available entries of 10 to each of the throttling module 40. After receiving the updated number of available entries of 10, the throttling module 40-1 determines that the target bandwidth threshold of the OS 1 decreases to 50 Gbps, and thus the bandwidth for the OS 1 for accessing the second hardware unit 20 is reduced to 50 Gbps. Similarly, after receiving the updated number of available entries of 10, the throttling module 40-2 determines that the target bandwidth threshold of the OS 2 decreases to 30 Gbps, and thus, the bandwidth for the OS 2 for accessing the second hardware unit 20 is reduced to 30 Gbps.

In view of the above, when the number of available entries in the cache queue is relatively small, that is, when there are fewer idle bandwidth resources for the second hardware unit 20, the first throttling module may control the first operating system to access the second hardware unit 20 by lower bandwidth, so as to meet requirements of other operating systems for the bandwidth resources. When the number of available entries in the cache queue is relatively large, that is, when there are more idle bandwidth resources for the second hardware unit 20, the first throttling module may control the first operating system to access the second hardware unit 20 by higher bandwidth, so as to fully utilize the bandwidth resources for the second hardware unit 20 and improve the service performance of the first operating system.

In addition, when the state value of the cache queue includes the number of available entries in the write queue and the number of available entries in the read queue, the first throttling module performs throttling on the read access and the write access of the first operating system, separately. In other words, the bandwidth for the write access of the first operating system to the second hardware unit 20 may be controlled, and the bandwidth for the read access of the first operating system to the second hardware unit 20 may also be controlled.

It may be learned from the foregoing technical solutions that, according to the method provided in the embodiments of the present disclosure, the bandwidth for each of the operating systems for accessing the second hardware unit 20 may be dynamically controlled based on the usage state of the cache queue, so that the bandwidth resources for the second hardware unit 20 are allocated more reasonably. Not only the service performance of each of the operating systems may be improved, but also utilization of the bandwidth resources may be increased, wastes of the bandwidth resources being reduced.

In an implementation, the state value of the cache queue may include a plurality of state value intervals, which may be separated by plurality of state thresholds. In some examples, the state threshold may also be referred to as a watermark value, and the state value interval may also be referred to as a watermark value interval.

A number of the state thresholds may be m, where m is an integer greater than or equal to 1. In this case, m+1 state value intervals may be formed by the m state thresholds in a numerical order from large to small or from small to large, which is specifically described below in conjunction with examples.

For example, the state threshold may be a threshold for the number of available entries. If the cache queue contains 100 entries, the threshold for the number of available entries range from 0 to 100. For example, m thresholds W₁-Wₘ for the number of available entries respectively are W₁=90, W₂=80, ..., Wₘ₋₁=20, and Wₘ=10. A total of m+1 state value intervals may be formed by the m thresholds for the number of available entries. For example, a number of available entries that is greater than (or equal to) 90 corresponds to a state value interval 1, a number of available entries that is less than (or equal to) 90 and greater than (or equal to) 80 corresponds to a state value interval 2, a number of available entries that is less than (or equal to) 20 and greater than (or equal to) 10 corresponds to a state value interval m, and a number of available entries that is less than (or equal to) 10 corresponds to a state value interval m+1.

For example, the state threshold may be stored in a register, then the throttling module 40 may read the state threshold from the register. Registers may be configured for each of the throttling modules 40, respectively, so that state thresholds may be set for the throttling modules 40 separately. In other words, the state thresholds set for the throttling modules 40 may be same or different. Certainly, the throttling modules 40 may also share the register, so that the throttling modules 40 may use a same state threshold. Moreover, by modifying content of the register, the state threshold may be flexibly set to meet different bandwidth control requirements.

Different state value intervals may correspond to different throttling parameters. For a same state value interval, the throttling parameters set for different operating systems may be same or different. Taking 100 Gbps of bandwidth resources for the second hardware unit 20 as an example, relationships between various bandwidth thresholds of various operating systems and the state value intervals illustrated exemplarily in table 4, where W represents the number of available entries in the cache queue.

**Table 4:**

| State Value Interval | Bandwidth Threshold of Os 1 | Bandwidth Threshold of Os 2 | Bandwidth Threshold of Os 3 |
|---|---|---|---|
| state value interval 1 (W≥W1) | 90 Gbps | 70 Gbps | 60 Gbps |
| state value interval 2 (W₁≥W≥W₂) | 85 Gbps | 65 Gbps | 55 Gbps |
| ... | ... | ... | ... |
| state value interval m (Wₘ₋₁≥W≥Wₘ) | 55 Gbps | 35 Gbps | 25 Gbps |
| state value interval m+1 (W≤Wₘ) | 50 Gbps | 30 Gbps | 20 Gbps |

It should be noted herein that values shown in table 4 are only examples, and do not constitute specific limitations on the embodiments of the present disclosure.

For example, the relationships between various bandwidth thresholds of various operating systems and the state value intervals may be stored in the register. Registers may be configured for the throttling modules 40, respectively, and the register may also be shared by the throttling modules 40, which is not specifically limited herein. Moreover, by modifying the content of the register, the relationship between the bandwidth threshold of each of the operating systems and the state value interval may be flexibly set to meet different bandwidth control requirements.

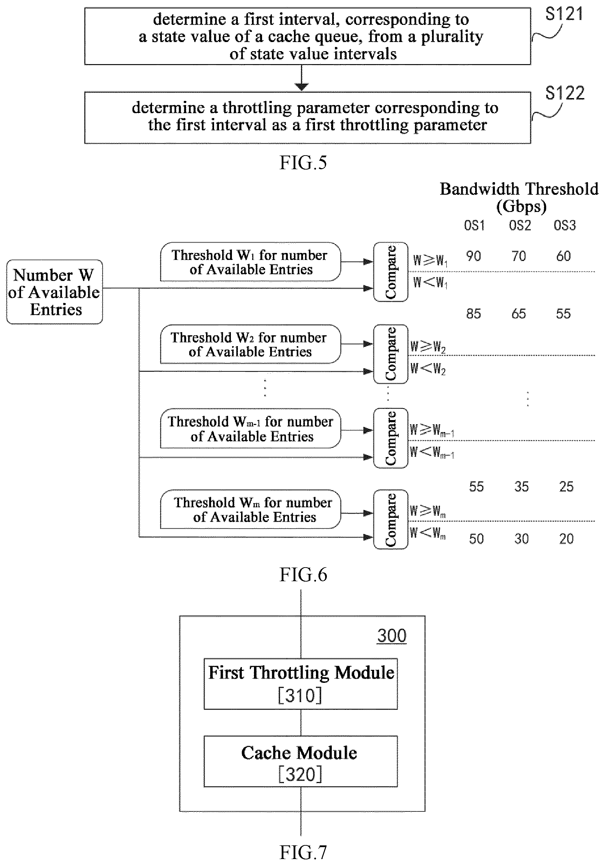

FIG. 5 is a flowchart illustrating step S120 of a bandwidth control method according to an exemplary embodiment of the present disclosure.

As shown in FIG. 5, in an implementation, step S120 may include the following steps.

Step S121. Determine a first interval corresponding to a state value of the cache queue from a plurality of state value intervals.

For example, the state value of the cache queue may be compared numerically with at least one state threshold. A state value interval where the state value is located may be determined, based on a numerical relationship between the state value and the at least one state threshold, as the first interval.

Step S122. Determine a throttling parameter corresponding to the first interval as the first throttling parameter.

For example, the first throttling module may determine, as the target bandwidth threshold of the first operating system, a throttling threshold (i.e., bandwidth threshold) of the first operating system corresponding to the first interval. For example, the throttling module 40-1 may determine the bandwidth threshold of the OS 1 corresponding to the first interval as the target bandwidth threshold of the OS 1, and the throttling module 40-2 may determine the bandwidth threshold of the OS 2 corresponding to the first interval as the target bandwidth threshold of the OS 2.

FIG. 6 is a schematic diagram illustrating determining of a target bandwidth threshold according to an exemplary embodiment of the present disclosure.

For example, as shown in FIG. 6, with reference to table 4, as an example, the m thresholds for the number of available entries are W₁=90, W₂=80, ..., Wₘ₋₁=20, and Wₘ=10, respectively. If the number W of available entries in the cache queue is 91, W≥W₁ may be determined through comparison, and thus the first interval is the state value interval 1. In this case, the target bandwidth threshold of the OS 1 is 90 Gbps, the target bandwidth threshold of the OS 2 is 70 Gbps, and the target bandwidth threshold of the OS 3 is 60 Gbps. If the number W of available entries in the cache queue is 85, W₁≥W≥W₂ may be determined through comparison, and thus the first interval is the state value interval 2. In this case, the target bandwidth threshold of the OS 1 is 85 Gbps, the target bandwidth threshold of the OS 2 is 65 Gbps, and the target bandwidth threshold of the OS 3 is 55 Gbps. If the number W of available entries in the cache queue is 8, W≤Wₘ may be determined through comparison, and thus the first interval is the state value interval m+1. In this case, the target bandwidth threshold of the OS 1 is 50 Gbps, the target bandwidth threshold of the OS 2 is 30 Gbps, and the target bandwidth threshold of the OS 3 is 20 Gbps.

In an implementation, the first throttling module may also compare the number of available entries in the cache queue with each of the threshold for the number of available entries according to a descending or ascending order of the thresholds for the number of available entries, so as to determine the target bandwidth threshold of the first operating system.

With reference to table 4, as an example, the throttling module 40-1 determines the target bandwidth threshold of the OS 1. If the number W of available entries is 95, the throttling module 40-1 may first compare the number W of available entries with the threshold W₁ for the number of available entries. Since W≥W₁, the throttling module 40-1 may determine that the target bandwidth threshold of the OS 1 is 90 Gbps, without further comparisons. If the number W of available entries is 85, since W<W₁, the throttling module 40-1 may compare the number W of available entries with the threshold W₂ for the number of available entries. Since W≥W₂, the throttling module 40-1 may determine that the target bandwidth threshold of the OS 1 is 85 Gbps, without further comparisons.

In view of the above, according to this implementation, a number of comparisons may be reduced, thereby a speed of determining the target bandwidth threshold by the first throttling module being improved and delays in bandwidth control by the first throttling module being reduced.

In the embodiments of the present disclosure, the first throttling module may control the bandwidth for the first operating system for accessing the second hardware unit 20 by means of bandwidth throttling, or may control the bandwidth for the first operating system for accessing the second hardware unit 20 by means of outstanding request throttling. In addition, the first throttling module may also control the bandwidth for the first operating system for accessing the second hardware unit 20 by bandwidth throttling in conjunction with outstanding request throttling. Certainly, the first throttling module may also control the bandwidth for the first operating system for accessing the second hardware unit 20 in other throttling manners, which is not limited in the embodiments of the present disclosure.

In another embodiment, the present disclosure provides a bandwidth control method, including:
determining a state value indicating a usage state of a cache queue, where the cache queue is used for caching of access instructions of multiple operating systems running on a first hardware unit for a second hardware unit;
determining, based on the state value and a plurality of throttling parameters preset for each of the operating systems, target bandwidth thresholds respectively for the first hardware unit to run the operating systems; and
controlling separately, based on the target bandwidth thresholds respectively corresponding to the operating systems, respective bandwidths for the operating systems running on the first hardware unit for accessing the second hardware unit.

In an implementation, the controlling separately, based on the target bandwidth thresholds respectively corresponding to the operating systems, respective bandwidths for the operating systems running on the first hardware unit for accessing the second hardware unit includes: controlling, based on the target bandwidth thresholds respectively corresponding to the operating systems, the respective bandwidth for the operating systems running on the first hardware unit for accessing the second hardware to be less than or equal to the target bandwidth thresholds respectively corresponding to the operating systems.

In an implementation, the determining a state value indicating a usage state of a cache queue includes: determining a number of available entries in plurality of entries of the cache queue that are used for caching of the access instructions; and determining the state value based on the number of available entries in the plurality of entries.

In an implementation, the determining, based on the state value and the plurality of throttling parameters preset for each of the operating systems, target bandwidth thresholds respectively for the first hardware unit to run the operating systems includes:
determining a first throttling parameter corresponding to each of the operating systems, based on the state value, from the plurality of throttling parameters preset for each of the operating systems; and determining the target bandwidth threshold corresponding to each of the operating systems based on the first throttling parameter corresponding to each of the operating systems.

In an implementation, the determining a first throttling parameter corresponding to each of the operating systems, based on the state value, from the plurality of throttling parameters preset for each of the operating systems includes: determining a first interval corresponding to the state value from a plurality of preset state value intervals; and determining the first throttling parameter, for the first interval, corresponding to each of the operating systems from the plurality of throttling parameters preset for each of the operating systems.

The implementation manner of any of the steps in the embodiments has been described above, description of which is not repeated herein.

### Exemplary Apparatus

The bandwidth control method provided in embodiments of the present disclosure is described above. It may be understood that, to implement functions of the control method, an integrated circuit (such as a SoC) or a first hardware unit in the SoC may include corresponding hardware and software for implementing hardware functions.

A person skilled in the art should easily conceive that, the steps of the bandwidth control method described in conjunction with the embodiments of the present disclosure may be implemented in a form of hardware or a combination of software-driven hardware in the embodiments of the present disclosure. Whether a certain function is implemented in a form of hardware or software-driven hardware depends on specific application and design constraints of the technical solutions. A person skilled in the art may use different methods to implement the described functions for each specific application, but such implementation should not be considered as being beyond the scope of the present disclosure.

FIG. 7 is a schematic diagram illustrating a structure of a bandwidth control apparatus according to an exemplary embodiment of the present disclosure.

As shown in FIG. 7, in an embodiment, the bandwidth control apparatus 300 includes:
a first throttling module 310 in a communication connection to a first hardware unit. For example, the first throttling module 310 may be in a communication connection to at least one first function module in the first hardware unit. The first hardware unit runs multiple operating systems, and the first throttling module 310 corresponds to a first operating system. The first function module may include a function module running the first operating system runs or managed by the first operating system. The first throttling module 310 is configured to: acquire a usage state of a cache queue, where the cache queue is used for caching of access stream of multiple operating systems running on a first hardware unit to a second hardware unit; determine a first throttling parameter for a first operating system based on the usage state of the cache queue; and control, based on the first throttling parameter, bandwidth for the first operating system for accessing the second hardware unit.

The cache queue is used for caching of the access stream of the multiple operating systems to the second hardware unit. For example, the cache queue is used for caching of read access instructions and/or write access instructions of the multiple operating systems to the second hardware unit.

In an implementation, the first throttling parameter includes a target bandwidth threshold of the first operating system. The first throttling module 310 is configured to control the bandwidth for the first operating system for accessing the second hardware unit to be less than or equal to the target bandwidth threshold.

In an implementation, the bandwidth control apparatus 300 may further include a cache module 320 in a communication connection to the first throttling module 310 and the second hardware unit. The cache module 320 may include the cache queue. The usage state of the cache queue may be indicated by a state value of the cache queue, and a magnitude of the state value represents an idle level or a crowding level of the cache queue. The cache module 320 is configured to transmit the state value of the cache queue to the first throttling module 310.

In an example, the cache module 320 may be, for example, a bandwidth sharing module.

In an implementation, the cache queue may include a plurality of entries, each of which is used for caching of an access instruction. The state value of the cache queue includes a number of available entries or a number of unavailable entries in the cache queue. The cache module 320 is configured to transmit the number of available entries or the number of unavailable entries in the cache queue to the first throttling module 310.

In an implementation, the first throttling module 310 is configured to determine the first throttling parameter from the plurality of throttling parameters of the first operating system based on the state value, where each of the throttling parameters includes one bandwidth threshold.

In an implementation, the first throttling module 310 is configured to determine a first interval corresponding to the state value from plurality of state value intervals, where each of the state value intervals corresponds to one throttling parameter; and determine the throttling parameter corresponding to the first interval as the first throttling parameter.

In an implementation, the plurality of state value intervals are separated by a plurality of state thresholds. The first throttling module 310 is configured to determine the first interval based on a numerical relationship between the state value and at least one state threshold.

It may be learned from the foregoing technical solutions that, according to the apparatus provided in the embodiments of the present disclosure, the bandwidth for each of the operating systems for accessing the second hardware unit may be dynamically controlled based on the usage state of the cache queue, so that the bandwidth resources for the second hardware unit are allocated more reasonably. Not only the service performance of each of the operating systems may be improved, but also utilization of the bandwidth resources may be increased, wastes of the bandwidth resources being reduced.

### Exemplary Integrated Circuit

An embodiment of the present disclosure also provides an integrated circuit, which may be, for example, a SoC.

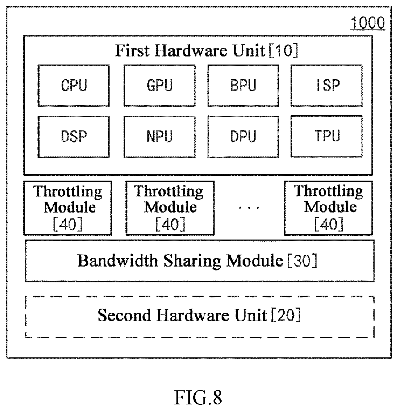

FIG. 8 is a schematic diagram illustrating a structure of an integrated circuit according to an exemplary embodiment of the present disclosure.

As shown in FIG. 8, in an implementation, an integrated circuit 1000 includes a first hardware unit 10, on which multiple operating systems run. The first hardware unit 10 may include a plurality of function modules on the integrated circuit 1000. Each of the function modules is configured to implement one or more functions of the integrated circuit 1000. For example, the function module may be a CPU, a GPU, an NPU, an ISP, a DSP, or the like. In addition, the function module may also be a core of the CPU, a stream processor of the GPU, a computing unit of the NPU, or the like.

In an implementation, each of the function modules of the first hardware unit 10 may communicate with other hardware units (such as a second hardware unit 20), for example, access the second hardware unit 20.

The second hardware unit 20 may include a storage such as a memory, or other hardware units that communicate with the first hardware unit 10. For example, the second hardware unit 20 may be a DRAM and/or an SRAM. In an example, the second hardware unit 20 may be located on the integrated circuit 1000. For example, the second hardware unit 20 may be an SRAM integrated on the SoC. In another example, the second hardware unit 20 may also be disposed separately with respect to the integrated circuit 1000. For example, the second hardware unit 20 may be a DRAM disposed separately with respect to the SoC.

In an embodiment, the integrated circuit 1000 further includes a plurality of throttling modules 40 in one-to-one correspondence to the multiple operating systems. The throttling modules 40 are in communication connections to the first hardware unit 10. At least one of the throttling module 40 is configured to implement functions of the first throttling module in the bandwidth control apparatus, for example, implementing steps of the bandwidth control method according to the embodiments of the present disclosure.

In an example, the throttling module 40 may receive a usage state of a cache queue; determine a throttling parameter of the operating system corresponding to the throttling module 40 based on the usage state of the cache queue; and then may control, based on the throttling parameter of the corresponding operating system, bandwidth for the operating system corresponding to the throttling module 40 for accessing the second hardware unit 20.

In an implementation, the integrated circuit 1000 may further include a bandwidth sharing module 30. The bandwidth sharing module may also be referred to as a cache module.

In an example, the bandwidth sharing module 30 may include the cache queue. The usage state of the cache queue may be indicated by a state value of the cache queue, and the bandwidth sharing module 30 may transmit the state value of the cache queue to each of the throttling modules 40.

It may be learned from the foregoing technical solutions that, according to the integrated circuit provided in the embodiments of the present disclosure, the bandwidth for each of the operating systems for accessing the second hardware unit may be dynamically controlled based on the usage state of the cache queue, so that the bandwidth resources for the second hardware unit are allocated more reasonably. Not only the service performance of each of the operating systems may be improved, but also utilization of the bandwidth resources may be increased, wastes of the bandwidth resources being reduced.

### Exemplary Electronic Device

An embodiment of the present disclosure provides an electronic device that may be applied in vehicles, such as an intelligent connected vehicle. The electronic device may be, for example, a vehicle-mounted computing device, a vehicle-mounted computing platform, a vehicle-mounted computing unit, or an intelligent driving computing platform.

In an embodiment, the electronic device may include an integrated circuit according to the embodiment of the present disclosure. At least one operating system may run the integrated circuit, such as an intelligent driving system and a cockpit system, to implement relevant functions of a cockpit-driving integrated system.

In an embodiment, the electronic device may further include:
a housing for accommodating and mounting various components of an electronic device, to protect the components from dust and water immersion, and improve reliability of the electronic device;
a power module for supplying power to various hardware units of the electronic device;
a heat dissipation module, such as a cooling fan or a liquid cooling device, configured to dissipate heat from the electronic device, so as to reduce operating temperature of each of the components and improve operational stability of each of the components; and
an external interface for connecting various sensors on the vehicle, such as a camera, a laser radar, a millimeter wave radar, and an ultrasonic radar, to transmit instructions to the sensors or receive data returned by the sensors. The external interface may also connect various actuators of the vehicle, such as a driving system, a braking system, and a steering system, to transmit control instructions to the systems and receive feedback from the systems.

### Exemplary Vehicle

An embodiment of the present disclosure provides a vehicle, which may include a land vehicle, an aerial vehicle, a maritime vehicle, an underwater vehicle, a space vehicles, and the like. For details of specific content of the vehicle, reference may be made to the foregoing embodiments, and details are not described herein again. The vehicle may include an integrated circuit or an electronic device provided in the embodiments of the present disclosure, so as to implement the bandwidth control method according to the embodiments of the present disclosure.

### Exemplary Computer Program Product And Computer Readable Storage Medium

In addition to the foregoing method and device, the embodiments of the present disclosure may also relate to a computer program product including computer program instructions that, when run by a processor, cause the processor to implement the steps of the bandwidth control method according to the embodiments of the present disclosure, that are described in the "exemplary method" section of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, that, when run by a processor, cause the processor to implement the steps of the bandwidth control method according to the embodiments of the present disclosure, that are described in the "exemplary method" section of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, it should be pointed out that the advantages, superiorities, and effects mentioned in the present disclosure are merely examples but are not for limitation, and it cannot be considered that these advantages, superiorities, and effects are necessary for each of the embodiment of the present disclosure. In addition, specific details described above are merely for examples and for ease of understanding, rather than limitations. The details described above do not limit that the present disclosure must be implemented by using the foregoing specific details.

The block diagrams of the means, the apparatus, the device, and the system involved in the present disclosure are provided as illustrative examples only, and it is not intended to require or imply that they should be connected, arranged, or configured in the manner illustrated in the block diagrams. As those skilled in the art will appreciate, these means, apparatuses, devices, and systems may be connected, arranged, or configured in any manner. Terms such as "including", "containing", and "having" are open-ended terms, refer to and may be used interchangeably with "including but not limited to". The terms "or" and "and" as used herein refer to and may be used interchangeably with the term "and/or", unless otherwise clearly stated in the context. The term "such as" as used herein refers to and may be used interchangeably with the term "such as, but not limited to".

It should be further pointed out that, various components or various steps in the apparatus, the device, and the methods of the present disclosure may be decomposed and/or recombined. These decompositions and/or recombinations should be considered equivalent solutions of the present disclosure.

The above description of the disclosed aspects is provided, so that the present disclosure may be arrived at or carried out by. Various modifications to these aspects will be readily apparent to those skilled in the art, and the generic principles defined herein may be applied to other aspects without departing from the scope of the present disclosure. Therefore, the present disclosure is not intended to be limited to the aspects shown herein, but rather to the widest scope consistent with the principles and novel features disclosed herein.

The above description has been given for the purposes of illustration and description. In addition, this description is not intended to limit the embodiments of the present disclosure to the forms disclosed herein. Although a plurality of exemplary aspects and embodiments have been discussed above, those skilled in the art will figure out certain variations, modifications, changes, additions, and subcombinations thereof.

## Claims

1. A bandwidth control method, comprising:
determining a state value indicating a usage state of a cache queue, wherein the cache queue is used for caching of access stream, to a second hardware unit, of multiple operating systems running on a first hardware unit;
determining, based on the state value and a plurality of throttling parameters preset for each of the operating systems, bandwidth thresholds, as target bandwidth thresholds, respectively corresponding to the operating systems running on the first hardware unit, wherein each of the throttling parameters includes one of the bandwidth thresholds; and
controlling respectively, based on the target bandwidth thresholds respectively corresponding to the operating systems, bandwidths for the operating systems running on the first hardware unit for accessing the second hardware unit.

2. The method according to claim 1, wherein the controlling respectively, based on the target bandwidth thresholds respectively corresponding to the operating systems, bandwidths for the operating systems running on the first hardware unit for accessing the second hardware comprises:
controlling, based on the target bandwidth thresholds respectively corresponding to the operating systems, the bandwidth for each of the operating systems running on the first hardware unit for accessing the second hardware to be less than or equal to the target bandwidth thresholds respectively corresponding to the operating systems.

3. The method according to claim 1, wherein the determining a state value indicating a usage state of a cache queue comprises:
determining a number of available entries in a plurality of entries of the cache queue that are used for caching of the access stream or a number of unavailable entries; and
determining the state value based on the number of available entries in the plurality of entries.

4. The method according to claim 1, wherein the determining, based on the state value and a plurality of throttling parameters preset for each of the operating systems, target bandwidth thresholds respectively corresponding to the operating systems running on the first hardware unit comprises:
determining a first throttling parameter corresponding to each of the operating systems, based on the state value, from the plurality of throttling parameters preset for each of the operating systems; and
determining the target bandwidth threshold corresponding to each of the operating systems based on the first throttling parameter corresponding to each of the operating systems.

5. The method according to claim 4, wherein the determining a first throttling parameter corresponding to each of the operating systems, based on the state value, from the plurality of throttling parameters preset for each of the operating systems comprises:
determining a state value interval corresponding to the state value, as a first interval, from a plurality of preset state value intervals, wherein each of the state value intervals corresponds to one of the throttling parameters; and
determining a throttling parameter corresponding to the first interval corresponding to each of the operating systems, as the first throttling parameter, from the plurality of throttling parameters preset for each of the operating systems.

6. The method according to claim 5, wherein the determining a state value interval corresponding to the state value, as a first interval, from plurality of preset state value intervals comprises:
determining a plurality of state thresholds for separating and forming of the plurality of state value intervals; and
determining the first interval from the plurality of state value intervals based on a numerical relationship between the state value and at least one of the plurality of state thresholds.

7. The method according to claim 4, wherein the target bandwidth threshold increases as the number of the available entries in the cache queue increases.

8. The method according to claim 4, wherein
the target bandwidth threshold increases as the state value of the cache queue increases, when the state value includes the number of available entries in the cache queue; and
the target bandwidth threshold decreases as the state value increases, when the state value includes the number of unavailable entries in the cache queue.

9. The method according to claim 7, wherein the target bandwidth threshold increasing as the number of the available entries in the cache queue increasing includes:
the target bandwidth threshold continuously increases as the number of the available entries in the cache queue increases; or
the target bandwidth threshold intermittently increases as the number of the available entries in the cache queue increases.

10. The method according to claim 1, wherein the state value characterizes an idle level of the cache queue or a crowding level of the cache queue.

11. A bandwidth control system, comprising:
a first hardware unit on which multiple operating systems run;
a second hardware unit in communication with the first hardware unit;
a bandwidth sharing module disposed between the first hardware unit and the second hardware unit, wherein the bandwidth sharing module comprises a cache queue used for caching of access stream, to the second hardware unit, of the multiple operating systems, and is configured to generate a state value indicating a usage state of the cache queue; and
a plurality of throttling modules in one-to-one correspondence to the multiple operating systems, wherein each of the throttling modules is disposed between the first hardware unit and the bandwidth sharing module, and is configured to: determine, based on the state value and a plurality of throttling parameters preset for each of the operating systems, target bandwidth thresholds respectively corresponding to the operating systems running on the first hardware unit; and control respectively, based on the target bandwidth thresholds respectively corresponding to the operating systems, bandwidths for the operating systems running on the first hardware unit for accessing the second hardware unit.

12. The bandwidth control system according to claim 11, wherein the first hardware unit further comprises a plurality of function modules, and the multiple operating systems run on different functional modules;
each of the throttling modules is disposed between the function module of the first hardware unit and the bandwidth sharing module, and the throttling module and the function module that correspond to a same one of the operating systems communicate with each other; and
each of the function modules is configured to generate an access stream, to the second hardware unit, of the corresponding operating system.

13. An electronic device, comprising the bandwidth control system according to claim 11 or 12.

14. A vehicle, comprising the bandwidth control system according to claim 11 or 12 or the electronic device according to claim 13.

15. A non-transitory computer readable storage medium, on which a computer program is stored, wherein the computer program, when executed by a processor, causes the processor to implementing a bandwidth control method according to any one of claims 1 to 10.

## Patentansprüche

1. Bandbreitensteuerungsverfahren, umfassend:
Bestimmen eines Zustandswerts, der einen Nutzungszustand einer Cache-Warteschlange angibt, wobei die Cache-Warteschlange verwendet wird zum Zwischenspeichern eines Zugriffsstroms, auf eine zweite Hardwareeinheit, von mehreren Betriebssystemen, die auf einer ersten Hardwareeinheit ausgeführt werden;
Bestimmen, basierend auf dem Zustandswert und einer Vielzahl von Drosselungsparametern, voreingestellt für jedes der Betriebssysteme, von Bandbreitenschwellenwerten als Ziel-Bandbreitenschwellenwerte, die jeweils den auf der ersten Hardwareeinheit ausgeführten Betriebssystemen entsprechen, wobei jeder der Drosselungsparameter einen der Bandbreitenschwellenwerte beinhaltet; und
jeweiliges Steuern, basierend auf den Ziel-Bandbreitenschwellenwerten, die jeweils den Betriebssystemen entsprechen, von Bandbreiten für die auf der ersten Hardwareeinheit ausgeführten Betriebssysteme zum Zugreifen auf die zweite Hardwareeinheit.

2. Verfahren nach Anspruch 1, wobei das jeweilige Steuern, basierend auf den Ziel-Bandbreitenschwellenwerten, die jeweils den Betriebssystemen entsprechen, von Bandbreiten für die auf der ersten Hardwareeinheit ausgeführten Betriebssysteme zum Zugreifen auf die zweite Hardware umfasst:
Steuern, basierend auf den Ziel-Bandbreitenschwellenwerten, die jeweils den Betriebssystemen entsprechen, der Bandbreite für jedes der auf der ersten Hardwareeinheit ausgeführten Betriebssysteme zum Zugreifen auf die zweite Hardware um kleiner als oder gleich den Ziel-Bandbreitenschwellenwerten zu sein, die jeweils den Betriebssystemen entsprechen.

3. Verfahren nach Anspruch 1, wobei das Bestimmen eines Zustandswerts, der einen Nutzungszustand einer Cache-Warteschlange angibt, umfasst:
Bestimmen einer Anzahl von verfügbaren Einträgen in einer Vielzahl von Einträgen der Cache-Warteschlange, die zum Zwischenspeichern des Zugriffsstroms verwendet werden, oder einer Anzahl von nicht verfügbaren Einträgen; und
Bestimmen des Zustandswerts basierend auf der Anzahl von verfügbaren Einträgen in der Vielzahl von Einträgen.

4. Verfahren nach Anspruch 1, wobei das Bestimmen, basierend auf dem Zustandswert und einer Vielzahl von Drosselungsparametern, voreingestellt für jedes der Betriebssysteme, von Ziel-Bandbreitenschwellenwerten, die jeweils den auf der ersten Hardwareeinheit ausgeführten Betriebssystemen entsprechen, umfasst:
Bestimmen eines ersten Drosselungsparameters, der jedem der Betriebssysteme entspricht, basierend auf dem Zustandswert, aus der Vielzahl von Drosselungsparametern, die für jedes der Betriebssysteme voreingestellt sind; und
Bestimmen des Ziel-Bandbreitenschwellenwerts, der jedem der Betriebssysteme entspricht, basierend auf dem ersten Drosselungsparameter, der jedem der Betriebssysteme entspricht.

5. Verfahren nach Anspruch 4, wobei das Bestimmen eines ersten Drosselungsparameters, der jedem der Betriebssysteme entspricht, basierend auf dem Zustandswert, aus der Vielzahl von Drosselungsparametern, die für jedes der Betriebssysteme voreingestellt sind, umfasst:
Bestimmen eines Zustandswertintervalls, das dem Zustandswert entspricht, als ein erstes Intervall, aus einer Vielzahl von voreingestellten Zustandswertintervallen, wobei jedes der Zustandswertintervalle einem der Drosselungsparameter entspricht; und
Bestimmen eines Drosselungsparameters, der dem ersten Intervall entspricht, das jedem der Betriebssysteme entspricht, als den ersten Drosselungsparameter, aus der Vielzahl von Drosselungsparametern, die für jedes der Betriebssysteme voreingestellt sind.

6. Verfahren nach Anspruch 5, wobei das Bestimmen eines Zustandswertintervalls, das dem Zustandswert entspricht, als ein erstes Intervall, aus der Vielzahl von voreingestellten Zustandswertintervallen umfasst:
Bestimmen einer Vielzahl von Zustandsschwellenwerten zum Trennen und Bilden der Vielzahl von Zustandswertintervallen; und
Bestimmen des ersten Intervalls aus der Vielzahl von Zustandswertintervallen basierend auf einer numerischen Beziehung zwischen dem Zustandswert und mindestens einem der Vielzahl von Zustandsschwellenwerten.

7. Verfahren nach Anspruch 4, wobei der Ziel-Bandbreitenschwellenwert zunimmt, wenn die Anzahl der verfügbaren Einträge in der Cache-Warteschlange zunimmt.

8. Verfahren nach Anspruch 4, wobei
der Ziel-Bandbreitenschwellenwert zunimmt, wenn der Zustandswert der Cache-Warteschlange zunimmt, wenn der Zustandswert die Anzahl von verfügbaren Einträgen in der Cache-Warteschlange beinhaltet; und
der Ziel-Bandbreitenschwellenwert abnimmt, wenn der Zustandswert zunimmt, wenn der Zustandswert die Anzahl von nicht verfügbaren Einträgen in der Cache-Warteschlange beinhaltet.

9. Das Verfahren nach Anspruch 7, wobei, dass der Ziel-Bandbreitenschwellenwert zunimmt, wenn die Anzahl der verfügbaren Einträge in der Cache-Warteschlange zunimmt, beinhaltet:
der Ziel-Bandbreitenschwellenwert nimmt kontinuierlich zu, wenn die Anzahl der verfügbaren Einträge in der Cache-Warteschlange zunimmt; oder
der Ziel-Bandbreitenschwellenwert nimmt intermittierend zu, wenn die Anzahl der verfügbaren Einträge in der Cache-Warteschlange zunimmt.

10. Das Verfahren nach Anspruch 1, wobei der Zustandswert einen Leerlaufgrad der Cache-Warteschlange oder einen Überlastungsgrad der Cache-Warteschlange charakterisiert.

11. Bandbreitensteuerungssystem, umfassend:
eine erste Hardwareeinheit, auf der mehrere Betriebssysteme ausgeführt werden;
eine zweite Hardwareeinheit in Kommunikation mit der ersten Hardwareeinheit;
ein Bandbreitenteilungsmodul, das zwischen der ersten Hardwareeinheit und der zweiten Hardwareeinheit angeordnet ist, wobei das Bandbreitenteilungsmodul eine Cache-Warteschlange umfasst, die verwendet wird zum Zwischenspeichern eines Zugriffsstroms, auf die zweite Hardwareeinheit, von den mehreren Betriebssystemen, und das dazu konfiguriert ist, einen Zustandswert zu erzeugen, der einen Nutzungszustand der Cache-Warteschlange angibt; und
eine Vielzahl von Drosselungsmodulen in Eins-zu-Eins-Entsprechung zu den mehreren Betriebssystemen, wobei jedes der Drosselungsmodule zwischen der ersten Hardwareeinheit und dem Bandbreitenteilungsmodul angeordnet ist und konfiguriert ist zum: Bestimmen, basierend auf dem Zustandswert und einer Vielzahl von Drosselungsparametern, voreingestellt für jedes der Betriebssysteme, von Ziel-Bandbreitenschwellenwerten, die jeweils den auf der ersten Hardwareeinheit ausgeführten Betriebssystemen entsprechen; und jeweiligen Steuern, basierend auf den Ziel-Bandbreitenschwellenwerten, die jeweils den Betriebssystemen entsprechen, von Bandbreiten für die auf der ersten Hardwareeinheit ausgeführten Betriebssysteme zum Zugreifen auf die zweite Hardwareeinheit.

12. Bandbreitensteuerungssystem nach Anspruch 11, wobei die erste Hardwareeinheit ferner eine Vielzahl von Funktionsmodulen umfasst und die mehreren Betriebssysteme auf unterschiedlichen Funktionsmodulen ausgeführt werden;
jedes der Drosselungsmodule zwischen dem Funktionsmodul der ersten Hardwareeinheit und dem Bandbreitenteilungsmodul angeordnet ist, und das Drosselungsmodul und das Funktionsmodul, die einem selben der Betriebssysteme entsprechen, miteinander kommunizieren; und
jedes der Funktionsmodule dazu konfiguriert ist, einen Zugriffsstrom, auf die zweite Hardwareeinheit, des entsprechenden Betriebssystems zu erzeugen.

13. Elektronische Vorrichtung, umfassend das Bandbreitensteuerungssystem nach Anspruch 11 oder 12.

14. Fahrzeug, umfassend das Bandbreitensteuerungssystem nach Anspruch 11 oder 12 oder die elektronische Vorrichtung nach Anspruch 13.

15. Nicht-flüchtiges computerlesbares Speichermedium, auf dem ein Computerprogramm gespeichert ist, wobei das Computerprogramm, wenn es von einem Prozessor ausgeführt wird, den Prozessor dazu veranlasst, ein Bandbreitensteuerungsverfahren nach einem der Ansprüche 1 bis 10 zu implementieren.

## Revendications

1. Procédé de commande de bande passante, comprenant :
la détermination d'une valeur d'état indiquant l'état d'utilisation d'une file d'attente de mémoire cache, dans lequel la file d'attente de mémoire cache est utilisée pour la mise en cache d'un flux d'accès, vers une seconde unité matérielle, de multiples systèmes d'exploitation s'exécutant sur une première unité matérielle ;
la détermination, sur la base de la valeur d'état et d'une pluralité de paramètres de limitation prédéfinis pour chacun des systèmes d'exploitation, de seuils de bande passante, en tant que seuils de bande passante cibles, correspondant respectivement aux systèmes d'exploitation s'exécutant sur la première unité matérielle, dans lequel chacun des paramètres de limitation comprend l'un des seuils de bande passante ; et
la commande, respectivement, sur la base des seuils de bande passante cibles correspondant respectivement aux systèmes d'exploitation, de bandes passantes pour les systèmes d'exploitation s'exécutant sur la première unité matérielle pour accéder à la seconde unité matérielle.

2. Procédé selon la revendication 1, dans lequel la commande, respectivement, sur la base des seuils de bande passante cibles correspondant respectivement aux systèmes d'exploitation, de bandes passantes pour les systèmes d'exploitation s'exécutant sur la première unité matérielle pour accéder à la seconde unité matérielle comprend :
la commande, sur la base des seuils de bande passante cibles correspondant respectivement aux systèmes d'exploitation, de la bande passante pour chacun des systèmes d'exploitation s'exécutant sur la première unité matérielle pour accéder à la seconde unité matérielle de manière à être inférieure ou égale aux seuils de bande passante cibles correspondant respectivement aux systèmes d'exploitation.

3. Procédé selon la revendication 1, dans lequel la détermination d'une valeur d'état indiquant un état d'utilisation d'une file d'attente de mémoire cache comprend :
la détermination d'un nombre d'entrées disponibles dans une pluralité d'entrées de la file d'attente de mémoire cache qui sont utilisées pour la mise en cache du flux d'accès ou d'un nombre d'entrées indisponibles ; et
la détermination de la valeur d'état sur la base du nombre d'entrées disponibles dans la pluralité d'entrées.

4. Procédé selon la revendication 1, dans lequel la détermination, sur la base de la valeur d'état et d'une pluralité de paramètres de limitation prédéfinis pour chacun des systèmes d'exploitation, de seuils de bande passante cibles correspondant respectivement aux systèmes d'exploitation s'exécutant sur la première unité matérielle comprend :
la détermination d'un premier paramètre de limitation correspondant à chacun des systèmes d'exploitation, sur la base de la valeur d'état, parmi la pluralité de paramètres de limitation prédéfinis pour chacun des systèmes d'exploitation ; et
la détermination du seuil de bande passante cible correspondant à chacun des systèmes d'exploitation sur la base du premier paramètre de limitation correspondant à chacun des systèmes d'exploitation.

5. Procédé selon la revendication 4, dans lequel la détermination d'un premier paramètre de limitation correspondant à chacun des systèmes d'exploitation, sur la base de la valeur d'état, parmi la pluralité de paramètres de limitation prédéfinis pour chacun des systèmes d'exploitation comprend :
la détermination d'un intervalle de valeur d'état correspondant à la valeur d'état, en tant que premier intervalle, parmi une pluralité d'intervalles de valeur d'état prédéfinis, dans lequel chacun des intervalles de valeur d'état correspond à l'un des paramètres de limitation ; et
la détermination d'un paramètre de limitation correspondant au premier intervalle correspondant à chacun des systèmes d'exploitation, comme étant le premier paramètre de limitation, parmi la pluralité de paramètres de limitation prédéfinis pour chacun des systèmes d'exploitation.

6. Procédé selon la revendication 5, dans lequel la détermination d'un intervalle de valeur d'état correspondant à la valeur d'état, en tant que premier intervalle, parmi une pluralité d'intervalles de valeur d'état prédéfinis comprend :
la détermination d'une pluralité de seuils d'état pour séparer et former la pluralité d'intervalles de valeur d'état ; et
la détermination du premier intervalle parmi la pluralité d'intervalles de valeur d'état sur la base d'une relation numérique entre la valeur d'état et au moins l'un de la pluralité de seuils d'état.

7. Procédé selon la revendication 4, dans lequel le seuil de bande passante cible augmente à mesure que le nombre d'entrées disponibles dans la file d'attente de mémoire cache augmente.

8. Procédé selon la revendication 4, dans lequel
le seuil de bande passante cible augmente à mesure que la valeur d'état de la file d'attente de mémoire cache augmente, lorsque la valeur d'état comprend le nombre d'entrées disponibles dans la file d'attente de mémoire cache ; et
le seuil de bande passante cible diminue à mesure que la valeur d'état augmente, lorsque la valeur d'état comprend le nombre d'entrées indisponibles dans la file d'attente de mémoire cache.

9. Procédé selon la revendication 7, dans lequel le seuil de bande passante cible augmente à mesure que le nombre d'entrées disponibles dans la file d'attente de mémoire cache augmente comprend :
le seuil de bande passante cible augmente de manière continue à mesure que le nombre d'entrées disponibles dans la file d'attente de mémoire cache augmente ; ou
le seuil de bande passante cible augmente par intermittence à mesure que le nombre d'entrées disponibles dans la file d'attente de mémoire cache augmente.

10. Procédé selon la revendication 1, dans lequel la valeur d'état caractérise un niveau d'inactivité de la file d'attente de mémoire cache ou un niveau de congestion de la file d'attente de mémoire cache.

11. Système de commande de bande passante, comprenant :
une première unité matérielle sur laquelle s'exécutent de multiples systèmes d'exploitation ;
une seconde unité matérielle en communication avec la première unité matérielle ;
un module de partage de bande passante disposé entre la première unité matérielle et la seconde unité matérielle, dans lequel le module de partage de bande passante comprend une file d'attente de mémoire cache utilisée pour la mise en cache d'un flux d'accès, vers la seconde unité matérielle, des multiples systèmes d'exploitation, et est configuré pour générer une valeur d'état indiquant un état d'utilisation de la file d'attente de mémoire cache ; et
une pluralité de modules de limitation en correspondance biunivoque avec les multiples systèmes d'exploitation, dans lequel chacun des modules de limitation est disposé entre la première unité matérielle et le module de partage de bande passante, et est configuré pour : déterminer, sur la base de la valeur d'état et d'une pluralité de paramètres de limitation prédéfinis pour chacun des systèmes d'exploitation, des seuils de bande passante cibles correspondant respectivement aux systèmes d'exploitation s'exécutant sur la première unité matérielle ; et commander respectivement, sur la base des seuils de bande passante cibles correspondant respectivement aux systèmes d'exploitation, des bandes passantes pour les systèmes d'exploitation s'exécutant sur la première unité matérielle pour accéder à la seconde unité matérielle.

12. Système de commande de bande passante selon la revendication 11, dans lequel la première unité matérielle comprend en outre une pluralité de modules de fonction, et les multiples systèmes d'exploitation s'exécutent sur différents modules de fonction ;
chacun des modules de limitation est disposé entre le module de fonction de la première unité matérielle et le module de partage de bande passante, et le module de limitation et le module de fonction qui correspondent à un même système d'exploitation des systèmes d'exploitation communiquent entre eux ; et
chacun des modules de fonction est configuré pour générer un flux d'accès, vers la seconde unité matérielle, du système d'exploitation correspondant.

13. Dispositif électronique, comprenant le système de commande de bande passante selon la revendication 11 ou 12.

14. Véhicule, comprenant le système de commande de bande passante selon la revendication 11 ou 12 ou le dispositif électronique selon la revendication 13.

15. Support de stockage non transitoire lisible par ordinateur, sur lequel est stocké un programme informatique, dans lequel le programme informatique, lorsqu'il est exécuté par un processeur, amène le processeur à mettre en œuvre un procédé de commande de bande passante selon l'une quelconque des revendications 1 à 10.
